# EUROPÄISCHE PATENTSCHRIFT

(11) **EP 4 409 255 B1**
(45) Veröffentlichungstag und Bekanntmachung des Hinweises auf die Patenterteilung: **05.11.2025**
(21) Anmeldenummer: 22797037.3
(22) Anmeldetag: 23.09.2022
(51) Int. Cl.: G01M 3/18

(54) **VORRICHTUNG MIT LECKAGEDETEKTION EINES TROPFBAREN MEDIUMS FÜR EIN KRAFTFAHRZEUG**
DEVICE WITH LEAK DETECTION FOR A MEDIUM CAPABLE OF FORMING DROPS FOR A MOTOR VEHICLE
DISPOSITIF À DÉTECTION DE FUITE D'UN MILIEU FLUIDE POUR UN VÉHICULE AUTOMOBILE

(30) Priorität: 30.09.2021 DE 102021125363
(43) Veröffentlichungstag der Anmeldung: 07.08.2024
(73) Patentinhaber: MAN Truck & Bus SE, 80995 München (DE)
(72) Erfinder: KALASS, Rainer, 91189 Rohr (DE); BEGIC, Kristijan, 80995 München (DE)
(74) Vertreter: v. Bezold & Partner Patentanwälte - PartG mbB
(86) Internationale Anmeldenummer: PCT/EP2022/076481
(87) Internationale Veröffentlichungsnummer: WO 2023/052255

(56) Entgegenhaltungen:
- CN-U- 202 757 735
- DE-B3- 102007 032 250

## Beschreibung

Die Erfindung betrifft eine Vorrichtung mit Leckagedetektion eines tropfbaren Mediums für ein Kraftfahrzeug, sowie ein Kraftfahrzeug mit der Vorrichtung.

Kraftfahrzeuge, die insbesondere mit Dieselkraftstoffen betrieben werden, benötigen im Winterbetrieb eine elektrische Zusatzheizung zur Vermeidung von Eiskristallbildung und Paraffinbildung, besonders bei Temperaturen unter 0°C, bei Verwendung von Winterdiesel spätestens unter -22°C. Die eingebrachte elektrische Heizenergie verhindert die Verblockung des Kraftstofffeinfilters zumindest für einen gewissen Temperaturbereich, je nach elektrischer Leistungsfähigkeit und Durchflussmenge. Diese Heizer mit einem Heizelement in PTC-Technologie (PTC: "positive temperature coefficient", positiver Temperaturkoeffizient) ausgeführt, weisen integrierte Leistungs- und Steuerelektronik auf und werden bis heute so beispielsweise in Nutzfahrzeugen eingesetzt.

Die elektrisch leitende Verbindung zwischen dem direkt im Kraftstoff befindlichen Heizelement und der außerhalb des Tanks angeordneten Elektronik muss dazu mit einer dauerhaften Abdichtung gegen Kraftstoffaustritt ausgestattet sein.

Die im Stand der Technik verwendeten Gehäuse bzw. Tanks aus Kunststoffen und Abdichtungsmaterialen aus Elastomeren (Primärabdichtungen) bedingen über die Gebrauchsdauer und über die rein zeitliche Alterung eine Degradation der beabsichtigten Eigenschaften und Funktionen dieser verwendeten Werkstoffe. Eine Dauerfestigkeit dieser Komponenten ist aus wirtschaftlicher Sicht nicht möglich, sodass Komponenten daher mit Betriebsfestigkeiten auf Basis von bekannten physikalischen Belastungen (Umwelteinflüsse, thermischer Stress, Vibrationen) entwickelt werden. Vielmehr werden diese Arten der Konstruktionen im Einklang mit den gewählten Werkstoffen auf Basis positiver Laborerprobungen und Feldbewährungen und aus Gründen optimaler Stückkosten weiter in Verwendung sein.

Die langfristig angelegte Beständigkeit der Abdichtung gegen Kraftstoffaustritt bei einem ordnungsgemäß gefertigten Kraftstoffheizer steht ferner stark in Abhängigkeit der Schwere der Einsatzfälle. Dies bedeutet, dass bekannte und vorhersehbare physische und physikalische Umweltbelastungen im Rahmen der Entwicklung zwar gut abgesichert werden, die tatsächlichen Belastungen jedoch vereinzelt die Prüfparameter übersteigen. Zudem treten Abweichungen im Fertigungsprozess (d.h. Schwankungen in der Produktionsqualität) auf, die im EOL-Test (EOL: "end of life", Nutzungsende) nicht erkannt werden können und so die erwartete Nutzungsdauer verkürzen. Auch kann es nach langer Einsatzzeit und in Nähe des Endes der wirtschaftlichen Nutzung dieser Komponenten zum Versagen der Primärabdichtungen kommen. Eine Vorhersage oder Absicherung dessen ist nicht vollständig möglich. Die Primärabdichtung, z. B. eine Elastomer-Vergussmasse, löst sich in diesem Falle von den abzudichtenden Fügepartnern ab und der Kraftstoffheizer beginnt, meist vom Nutzer unbemerkt, in stetig steigendem Maße Kraftstoff in die Umwelt abzusondern.

Diese Problematik ist ferner nicht auf Kraftstoffheizer beschränkt.

Beispielsweise sind für Traktionsbatterien (Sekundärbatterien) in elektrisch betreibbaren Kraftfahrzeugen Kühl- und Temperierverfahren unter dem allgemeinen Begriff der "Immersion Cooling" bekannt, bei denen die elektrischen Speicherzellen zur Temperierung direkt mit Transformatorenöl umspült werden. Das Transformatorenöl hat eine annähernd gleiche Eigenschaft wie Dieselkraftstoffe, nämlich die besondere Eigenschaft der elektrischen Hochohmigkeit (Isolator).

Die elektrischen Schnittstellen dieser Traktionsbatterien sind vielfältig und umfassen, z. B. elektrische Verbindungen (Hochvoltanschlüsse, Niedervoltanschlüsse) aus beispielweise polymerextrudierten Kupferlitzen. Die Zwischenräume der aus feinen Runddrähten bestehenden Kupferlitzen sind durchlässig für tropfbare Medien wie das Transformatorenöl, wobei ein die Kupferlitzen umgebender Isolator zusätzlich als Schlauchsystem für das Transformatorenöl fungieren kann. Daher müssen diese elektrischen Verbindungen mit Abdichtungen gegen das Eintreten des Transformatorenöls ausgestattet sein. Auch diese verwendeten Abdichtungen degradieren über die Gebrauchsdauer, die Schwere der Einsatzfälle und über die rein zeitliche Alterung.

Die Patentschrift DE 10 2007 032250 B3 offenbart eine Vorrichtung zum Detektieren von Flüssigkeitslecks. CN 202757735 U offenbart eine Leckagedetektion für eine Rohrdurchführung aus einem Behälter.

Der Erfindung liegt somit die Aufgabe zu Grunde, eine verbesserte Technik zum besseren Umgang mit einem möglichen Austritt eines tropfbaren Mediums in einem Kraftfahrzeug bereitzustellen, welche die Nachteile bekannter Ansätze zumindest teilweise vermeidet. Insbesondere besteht die Aufgabe darin, eine Vorrichtung mit Leckagedetektion eines tropfbaren Mediums für ein Kraftfahrzeug bereitzustellen, die eine frühzeitige Reaktion auf eine Degradation der verwendeten Abdichtung und damit auf einen Austritt des tropfbaren Mediums im Falle einer Leckage ermöglicht.

Die Aufgabe wird gelöst durch die Merkmale des unabhängigen Anspruchs 1. Vorteilhafte Weiterbildungen sind in den abhängigen Ansprüchen und der Beschreibung angegeben.

Gemäß einem ersten allgemeinen Aspekt der Erfindung wird eine Vorrichtung mit Leckagedetektion eines tropfbaren Mediums (d. h. einer Flüssigkeit) für ein Kraftfahrzeug, vorzugsweise Nutzfahrzeug, bereitgestellt. Die Vorrichtung umfasst einen Behälter (z. B. aus Kunststoff) zur Aufnahme des tropfbaren Mediums, vorzugsweise eines nicht-leitenden (d. h. nicht elektrisch leitenden) tropfbaren Mediums. Die Bezeichnung "nicht-leitend" umfasst nicht nur elektrisch isolierende Medien, sondern umfasst auch dielektrische (und/oder hochohmige) Medien. Die Vorrichtung umfasst ferner einen elektrischen Leiter (z. B. aus Kupfer), der durch eine abgedichtete Leiterdurchführung des Behälters hindurchgeführt ist. Die Vorrichtung umfasst ferner eine außerhalb des Behälters angeordnete Detektionsvorrichtung zur Detektion einer Leckage in der Leiterdurchführung. Im Falle der Leckage tritt durch diese das tropfbare Medium entlang des elektrischen Leiters aus dem Behälter aus. Die Leckage ist eine Leckage in der Leiterdurchführung, durch die das tropfbare Medium entlang des elektrischen Leiters aus dem Behälter austritt. Die Leckage ist insbesondere ein (mit fortlaufender Gebrauchsdauer der Vorrichtung entstehender) Ablösungsbereich zwischen einer Dichtmasse zur Abdichtung der Leiterdurchführung und dem elektrischen Leiter.

Die Detektionsvorrichtung ist zweckmäßig an einer Position angeordnet, dass es im Falle der Leckage das durch die Leiterdurchführung austretende tropfbare Medium detektieren (feststellen, erfassen, sensieren) kann. Dies ist insbesondere eine Position, an der die Detektionsvorrichtung das austretende tropfbare Medium detektieren kann, bevor das austretende tropfbare Medium die Vorrichtung verlassen kann (in die Umwelt abgesondert wird). Vorzugsweise ist die Detektionsvorrichtung an einer Position angeordnet, dass es im Falle einer Leckage in Berührung mit dem durch die Leiterdurchführung austretende tropfbare Medium kommt (z. B. eine Kontamination der Detektionsvorrichtung mit dem tropfbaren Medium erfolgt).

Durch die vorliegende Offenbarung wird somit eine Vorrichtung geschaffen, die eine frühzeitige Detektion einer Leckage in einer Leiterdurchführung bereitstellt, bevor das im Falle der Leckage austretende tropfbare Medium in die Umwelt abgesondert wird. Die Vorrichtung berücksichtigt u.a., dass die Leckage mit fortlaufender Gebrauchsdauer der Vorrichtung insbesondere dadurch entsteht, dass sich die Abdichtung innerhalb der Leiterdurchführung von den abzudichtenden Fügepartnern, insbesondere dem durch die Leiterdurchführung hindurchgeführte elektrische Leiter, ablöst. Eine solche Leckage zeichnet sich entsprechend dadurch aus, dass das tropfbare Medium in dem Ablösungsbereich (z. B. Risse, Lunker) entlang des elektrischen Leiters aus dem Behälter austritt. Die hier offenbarte Vorrichtung ist insbesondere derart ausgebildet, solche Leckagen zu detektieren.

Ferner schafft die vorliegende Offenbarung eine Technik zur Leckagedetektion, wobei bereits vorhandene Anordnungen innerhalb eines Kraftfahrzeugs, z. B. ein Kraftstofftank mit einem Kraftstoffheizer, mit einem gemäß der Offenbarung ausgebildeten Detektionsvorrichtung nachgerüstet werden kann.

Gemäß einer besonders bevorzugten Ausführungsform kann der elektrische Leiter außerhalb des Behälters zumindest abschnittsweise von der, vorzugsweise dauerelastischen und/oder an den Behälter (abdichtend) angrenzenden, Dichtmasse (z. B. Elastomer-Dichtmasse, Vergussmasse) zur Abdichtung der Leiterdurchführung umgeben (z. B. eingebettet, umspritzt) sein. Der elektrische Leiter kann zusätzlich innerhalb der Leiterdurchführung von der Dichtmasse umgeben sein. Alternativ oder ergänzend kann ein weiteres Abdichtungselement oder -masse innerhalb der Leiterdurchführung zu dessen Abdichtung angeordnet sein. Die Detektionsvorrichtung kann ausgebildet sein, die Leckage anhand des ausgetretenen tropfbaren Mediums, welches in einen Bereich (insbesondere dem Ablösungsbereich) zwischen dem elektrischen Leiter und der Dichtmasse eingedrungen ist, zu detektieren. Die zusätzliche Anordnung der Dichtmasse außerhalb der Leiterdurchführung führt auf vorteilhafte Weise zu einer verbesserten Abdichtung, wobei u.a. die Ablösungsbereiche entlang des elektrischen Leiters, die notwendig sind, damit das tropfbare Medium die Vorrichtung verlassen und an die Umwelt abgesondert wird, vergrößert werden. Ferner kann der elektrische Leiter so durch die Dichtmasse vor weiteren äußeren Einflüssen geschützt werden.

Gemäß einer weiteren bevorzugten Ausführungsform kann die Detektionsvorrichtung mit dem elektrischen Leiter zumindest abschnittweise von der Dichtmasse umgeben sein. Die Dichtmasse kann dadurch auf vorteilhafte Weise als Haltemittel der Detektionsvorrichtung dienen. Eine Anordnung der Detektionsvorrichtung innerhalb der Dichtmasse hat ferner den Vorteil, dass sich keine unmittelbar nach außen führende Ablösungsbereiche zwischen der Detektionsvorrichtung und der Dichtmasse bilden können, durch die das tropfbare Medium im Falle der Leckage an die Umwelt abgesondert werden kann, bevor die Leckage detektiert wird.

Der elektrische Leiter ist außerhalb des Behälters mit einem elektrotechnischen Element elektrisch verbunden. Das elektrotechnische Element kann eine elektrische Energiequelle zur elektrischen Versorgung der Detektionsvorrichtung bereitstellen. Alternativ oder ergänzend kann das elektrotechnische Element eine (elektrische und/oder datentechnische) Schnittstelle zur elektrischen Versorgung der Detektionsvorrichtung (z. B. mittels einer Kraftfahrzeug-Stromversorgung) und/oder zur Datenkommunikation zwischen der Detektionsvorrichtung und eines externen Kommunikationssystems (z. B. eines Kraftfahrzeug-Steuergeräts) umfassen. Die Detektionsvorrichtung ist am elektrischen Leiter, an einer Übergangsstelle vom elektrischen Leiter zum elektrotechnischen Element und/oder an dem elektrotechnischen Element angeordnet. Vorteilhaft kann die Detektionsvorrichtung so an erwarteten Ablösungsbereichen entlang des elektrischen Leiters bzw. des elektrotechnischen Elements positioniert werden, um das in die Ablösungsbereiche eingedrungene tropfbare Medium detektieren zu können.

Gemäß einer weiteren Ausführungsform kann das elektrotechnische Element mit der Detektionsvorrichtung (zumindest abschnittweise) von der Dichtmasse umgeben sein, vorzugsweise derart, dass sich das tropfbare Medium im Falle der Leckage zumindest teilweise an einer Oberfläche des elektrotechnischen Elements ausbreitet und von der, vorzugsweise an dem elektrotechnischen Element angeordneten, Detektionsvorrichtung detektierbar ist. Die Anordnung des elektrotechnischen Elements innerhalb der Dichtmasse führt vorteilhafterweise zu einer weiteren Verbesserung der Abdichtung, da die Ablösungsbereiche entlang des elektrischen Leiters und anschließend entlang des elektrotechnischen Elements, die notwendig sind, damit das tropfbare Medium die Vorrichtung verlassen und an die Umwelt abgesondert wird, weiter vergrößert werden. Ferner kann das elektrotechnischen Element so durch die Dichtmasse vor weiteren äußeren Einflüssen geschützt werden.

Gemäß einer weiteren Ausführungsform kann das elektrotechnische Element eine Leiterplatte umfassen. Die Leiterplatte kann vorzugsweise mittels einer Press-Fit-Verbindung mit dem elektrischen Leiter elektrisch verbunden sein.

Gemäß einer besonderen Ausführungsvariante kann die Leckage durch ein Feststellen einer Veränderung der elektrischen Leitfähigkeit der Detektionsvorrichtung bei Kontamination mit dem tropfbaren Medium detektierbar sein. Die Veränderung der elektrischen Leitfähigkeit kann z. B. durch eine messbare Veränderung einer angelegten elektrischen Spannung festgestellt werden. Die Detektionsvorrichtung kann beispielsweise gemäß einem der folgenden drei Ausführungsbeispiele ausgebildet sein.

Gemäß dem ersten Ausführungsbeispiel kann die Detektionsvorrichtung zwei elektrische Kontakte und einen Isolator, der zwischen den elektrischen Kontakten angeordnet und ausgebildet ist, sich bei der Kontaminierung mit dem tropfbaren Medium aufzulösen, umfassen. Die Kontakte können kraftbeaufschlagt sein, vorzugsweise derart, dass sich eine Kontaktierung der elektrischen Kontakte einstellt und damit die elektrische Leitfähigkeit der Detektionsvorrichtung verändert, wenn sich der Isolator auflöst. Die Kontaktierung der elektrischen Kontakte kann einen normalerweise offenen Stromkreis (irreversibel) schließen.

Gemäß dem zweiten Ausführungsbeispiel kann die Detektionsvorrichtung eine Elektrodenanordnung mit einem innerhalb der Elektrodenanordnung angeordneten Material (z. B. ein Trockenisolator oder Dielektrikum) umfassen. Eine Permittivität des Materials kann durch die Kontamination mit dem tropfbaren Medium veränderbar und dadurch die elektrische Leitfähigkeit der Detektionsvorrichtung veränderbar sein. Vorzugsweise kann das Material durch die Kontamination elektrisch leitfähig werden.

Gemäß dem dritten Ausführungsbeispiel kann die Detektionsvorrichtung einen Schwingkreis mit der Elektrodenanordnung umfassen. Vorzugsweise kann die Permittivität des Materials durch die Kontamination mit dem tropfbaren Medium veränderbar und dadurch eine Schwingkreisfrequenzverschiebung feststellbar sein.

Die drei Ausführungsbeispiele bilden somit (Teil-)Stromkreise, die zum einen auf einfache Weise umsetzbar sind, und zum anderen eine Leckage auf einfache Weise durch Strombeaufschlagung und das Feststellen einer Veränderung der elektrischen Leitfähigkeit bei Kontamination, insbesondere des verwendeten Isolators bzw. Materials, mit dem tropfbaren Medium detektierbar ist. Zur Umsetzung kann der Werksstoff des Isolators bzw. des Materials entsprechend des Anwendungsfalls fachmännisch ausgewählt werden.

Gemäß einer weiteren Ausführungsform kann die Detektionsvorrichtung ferner eine Steuereinheit, die mit einem Kraftfahrzeug-Steuergerät zur Übertragung von Detektionsinformationen signaltechnisch verbunden und/oder mit einer Kraftfahrzeug-Stromversorgung elektrisch verbunden ist, umfassen.

Die Steuereinheit kann ausgebildet sein, die elektrischen Kontakte und/oder die Kathodenanordnung der Detektionsvorrichtung mit elektrischem Strom zu beaufschlagen. Die Steuereinheit kann von der Kraftfahrzeug-Stromversorgung und/oder einer (separaten) elektrischen Stromquelle der Detektionsvorrichtung mit elektrischem Strom versorgt werden.

Die elektrische Verbindung mit der Kraftfahrzeug-Stromversorgung hat den Vorteil, dass die Detektionsvorrichtung keine eigene Stromversorgung zur Beaufschlagung der elektrischen Kontakte bzw. der Kathodenanordnung benötigt und z. B. eine bereits durch das elektrotechnische Element bereitgestellte Schnittstelle zur elektrischen Verbindung mit der Kraftfahrzeug-Stromversorgung verwendet werden kann. Die eigene elektrische Stromquelle hat den Vorteil, dass die Detektionsvorrichtung unabhängig von der Position der Kraftfahrzeug-Stromversorgung positioniert werden kann und keine zusätzliche Verkabelung zwischen der Detektionsvorrichtung und der der Kraftfahrzeug-Stromversorgung notwendig ist.

Die Detektionsinformationen können insbesondere Informationen umfassen, dass eine Leckage detektiert worden ist. Die Detektionsvorrichtung kann ausgebildet sein, die Detektionsinformationen, vorzugsweise ausschließlich, im Falle einer Leckagedetektion an das Kraftfahrzeug-Steuergerät zu senden (d. h. das Vorliegen der Leckage an das Kraftfahrzeug-Steuergerät zu melden). Die Detektionsinformationen können z. B. über ein Kraftfahrzeug-Bordnetz an das Kraftfahrzeug-Steuergerät gesendet werden. Die Detektionsinformationen können ferner über das Kraftfahrzeug-Steuergerät (z. B. mittels eines signaltechnisch verbindbaren Service- und Diagnosesystem) auslesbar sein.

Alternativ oder ergänzend kann das Kraftfahrzeug-Steuergerät ausgebildet sein, ein Steuersignal an eine, vorzugsweise im Kraftfahrzeug-Innenraum, besonders bevorzugt am Armaturenbrett, angeordnete, Anzeigevorrichtung zur Ausgabe eines Warnhinweises zu senden. Das Kraftfahrzeug-Steuergerät kann insbesondere ausgebildet sein, das Steuersignal (ausschließlich) zu senden, wenn Detektionsinformationen, dass eine Leckage detektiert worden ist, empfangen worden sind. Der Warnhinweis kann insbesondere umfassen, dass eine Leckage detektiert worden ist.

Alternativ oder ergänzend zur Übertragung der Detektionsinformationen an das Kraftfahrzeug-Steuergerät kann die Steuereinheit ferner für eine, vorzugsweise unmittelbare und/oder kabellose, Übertragung der Detektionsinformationen an eine, z. B. tragbare, Anzeigevorrichtung ausgebildet sein. Die Anzeigevorrichtung kann ausgebildet sein, den Warnhinweis auszugeben, wenn die Detektionsinformationen übertragen worden sind.

Die Übertragung der Detektionsinformationen führt somit vorteilhafterweise dazu, dass ein Nutzer, z. B. der Fahrer oder eine Fachkraft für Service- oder Wartungsarbeiten, frühzeitig über die detektierte Leckage gewarnt werden und entsprechende Maßnahmen (z. B. eine Reparatur bzw. Erneuerung der defekten Abdichtung) einleiten kann, bevor es zum Austritt des tropfbaren Mediums in die Umwelt kommt. Ferner vorteilhafterweise kann eine bereits im Kraftfahrzeug vorhandene Infrastruktur, z. B. eine bereits durch das elektrotechnische Element bereitgestellte Schnittstelle, zur Datenkommunikation mit dem Kraftfahrzeug-Steuergerät verwendet werden.

Gemäß einer weiteren Ausführungsform kann die Steuereinheit ferner ausgebildet sein, die Veränderung der elektrischen Leitfähigkeit der Detektionsvorrichtung festzustellen und vorzugsweise anhand der Veränderung der elektrischen Leitfähigkeit die Leckage zu detektieren. Dazu kann die Steuereinheit eine Auswerteelektronik umfassen. Die Feststellung der Veränderung der elektrischen Leitfähigkeit erfolgt (zeitlich) während der elektrischen Beaufschlagung der elektrischen Kontakte und/oder der Kathodenanordnung der Detektionsvorrichtung. Die Steuereinheit kann ferner ausgebildet sein, die Feststellung der Veränderung der elektrischen Leitfähigkeit (und vorzugsweise die elektrische Beaufschlagung der elektrischen Kontakte und/oder der Kathodenanordnung der Detektionsvorrichtung) kontinuierlich, regelmäßig (periodisch) und/oder zu vorher festgelegten Zeitpunkten (z. B. zum Betriebsstart des Kraftfahrzeugs) durchzuführen.

Gemäß einer speziellen Ausführungsform kann die Vorrichtung eine Kraftstofftankvorrichtung sein. Der Behälter kann ein Kraftstofftank (z. B. ein Druckraum) zur Aufnahme eines Kraftstoffs, vorzugsweise eines Dieselkraftstoffs, als das tropfbare Medium sein. Das elektrotechnische Element kann eine Leistungs- und/oder Steuerelektronik eines Kraftstoffheizers umfassen, die über den elektrischen Leiter mit einem innerhalb des Kraftstofftanks angeordneten Heizelements, vorzugsweise mit einem positiven Temperaturkoeffizienten, elektrisch verbunden sein. Somit kann auf vorteilhafte Weise ein bereits vorhandener Kraftstofftank mit Kraftstoffheizer mit der Detektionsvorrichtung nachgerüstet werden, um so die Funktion der Leckagedetektion bereitstellen zu können.

Gemäß einer weiteren speziellen Ausführungsform kann die Vorrichtung eine Traktionsbatterievorrichtung sein. Der Behälter kann ein Gehäuse der Traktionsbatterievorrichtung sein, in dem elektrische Speicherzellen zur Kühlung von einem Kühlmittel, vorzugsweise einem Transformatorenöl, als das tropfbare Medium umspült werden. Der elektrische Leiter kann eine Hochvolt- und/oder eine Niedervoltverbindung umfassen. Alternativ oder ergänzend kann das elektrotechnische Element eine Elektronik und/oder einen Steckverbinder umfassen. Ferner alternativ oder ergänzend kann der elektrische Leiter Einzelleitungen und/oder, vorzugsweise polymerextrudierte, Kupferlitzen umfassen. Somit kann auf vorteilhafte Weise eine bereits vorhandene Traktionsbatterievorrichtung mit der Detektionsvorrichtung nachgerüstet werden, um so die Funktion der Leckagedetektion bereitstellen zu können.

Gemäß einem weiteren allgemeinen Aspekt der Erfindung wird ein Kraftfahrzeug, vorzugsweise ein Nutzfahrzeug, mit einer Vorrichtung wie hierin offenbart bereitgestellt.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Vorrichtung gemäß einer Ausführungsform;
- Figur 2: eine Ansicht eines Teils der Vorrichtung außerhalb des Behälters im Falle einer Leckage gemäß einer Ausführungsform;
- Figur 3: eine schematische Ansicht eines elektrotechnischen Elements mit einer Detektionsvorrichtung gemäß einer Ausführungsform; und
- Figur 4: schematische Ansichten mehrerer Ausführungsformen von Elementen der Detektionsvorrichtung.

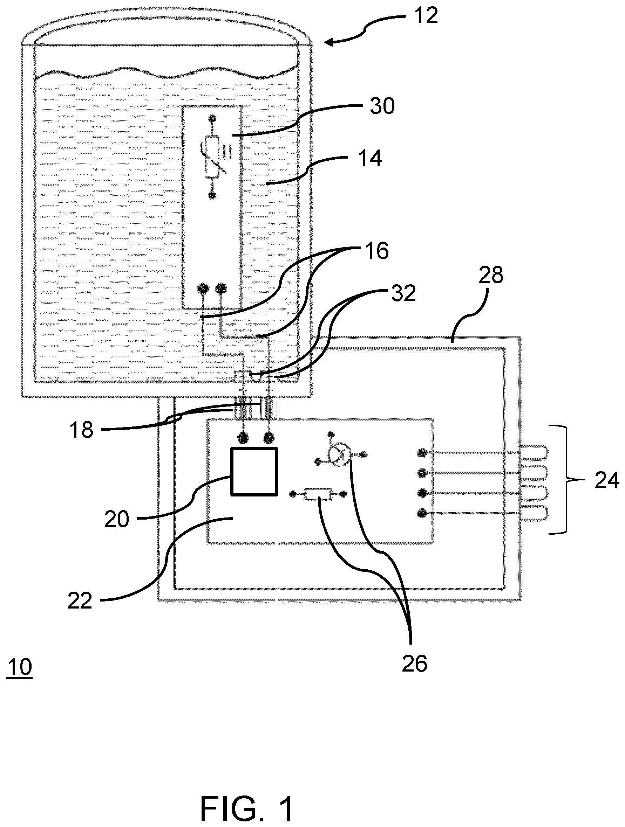

Figur 1 zeigt eine Vorrichtung 10 mit Leckagedetektion eines tropfbaren Mediums 14 gemäß einer Ausführungsform. Die Vorrichtung 10 umfasst einen Behälter 12, eine elektrischen Leitung 16 und eine Detektionsvorrichtung 20.

Der Behälter 12 dient zur Aufnahme des tropfbaren Mediums 14, vorzugsweise eines nicht-leitenden tropfbaren Mediums, z. B. ein Dieselkraftstoff oder ein Transformatorenöl.

Der elektrische Leiter 16 ist durch eine abgedichtete Leiterdurchführung 32 des Behälters 12 hindurchgeführt. Ferner ist der elektrische Leiter 16 außerhalb des Behälters 12 zumindest abschnittsweise von einer Dichtmasse 18 zur Abdichtung der Leiterdurchführung 32 umgeben.

Mit fortlaufender Gebrauchsdauer und Belastungen kann sich die Dichtmasse 18 von dem abzudichtenden Fügepartner, d.h. dem elektrischen Leiter 16, lösen, sodass eine Leckage in der Leiterdurchführung 32 und insbesondere entlang des elektrischen Leiters entstehen kann.

Zur Detektion einer solchen Leckage ist daher die Detektionsvorrichtung 20 außerhalb des Behälters 12 angeordnet, sodass die Detektionsvorrichtung 20 eine Leckage detektieren kann, wenn das tropfbare Medium 14 entlang des elektrischen Leiters 16 durch die Leiterdurchführung 32 aus dem Behälter 12 austritt.

In der gezeigten Ausführungsform ist die Detektionsvorrichtung 20 an einem elektrotechnischen Element 22, welches mit dem elektrischen Leiter 16 elektrisch verbunden ist, angeordnet. Alternativ kann die Detektionsvorrichtung 20 am elektrischen Leiter 16 oder an einer Übergangsstelle vom elektrischen Leiter 16 zum elektrotechnischen Element 22 angeordnet sein. Ausschlaggebend für die Position der Detektionsvorrichtung 20 ist, dass die Detektionsvorrichtung 20 das durch die Leckage austretende tropfbare Medium 14, z. B. durch Kontamination mit dem tropfbaren Medium 14, außerhalb des Behälters 12 detektieren kann.

Das elektrotechnisches Element 22 kann über den elektrischen Leiter 16 mit einem innerhalb des Gehäuses 12 angeordneten zweiten elektrotechnischen Element 30 verbunden sein. Ferner kann das elektrotechnische Element 22 elektrotechnische Bauteile 26, u.a. zur Steuerung des zweiten elektrotechnischen Elements 30, und eine Steckverbindung 24 aufweisen. Die Steckverbindung 24 kann z. B. zugänglich in einem Gehäuse 28 des elektrotechnischen Elements 22 ausgebildet sein.

Bei der Vorrichtung 10 kann es sich beispielsweise um eine Kraftstofftankvorrichtung mit Kraftstoffheizer handeln. Der Behälter 12 ist dabei als ein Kraftstofftank zur Aufnahme eines Kraftstoffs, vorzugsweise eines Dieselkraftstoffs, als das tropfbare Medium 14 ausgebildet. Das elektrotechnische Element 22 umfasst eine Leistungs- und/oder Steuerelektronik des Kraftstoffheizers, die über den elektrischen Leiter 16 mit einem innerhalb des Kraftstofftanks angeordneten Heizelements, vorzugsweise mit einem positiven Temperaturkoeffizienten, elektrisch verbunden ist.

Gemäß einem weiteren Beispiel kann die Vorrichtung 10 eine Traktionsbatterievorrichtung sein. Der Behälter 12 ist dabei ein Gehäuse einer Traktionsbatterievorrichtung, in dem elektrische Speicherzellen zur Kühlung von einem Kühlmittel, vorzugsweise einem Transformatorenöl, als das tropfbare Medium 14 umspült werden. Der elektrische Leiter 16 kann eine Hochvolt- und/oder eine Niedervoltverbindung, Einzelleitungen und/oder, vorzugsweise polymerextrudierte, Kupferlitzen umfassen. Das elektrotechnische Element 22 kann eine Elektronik und/oder einen Steckverbinder umfassen. Die elektrischen Speicherzellen können zur Übertragung von elektrischer Energie über den elektrischen Leiter 14 und das elektrotechnische Element 22 z. B. mit einer elektrischen Maschine oder einem elektrischen Verbraucher verbunden sein.

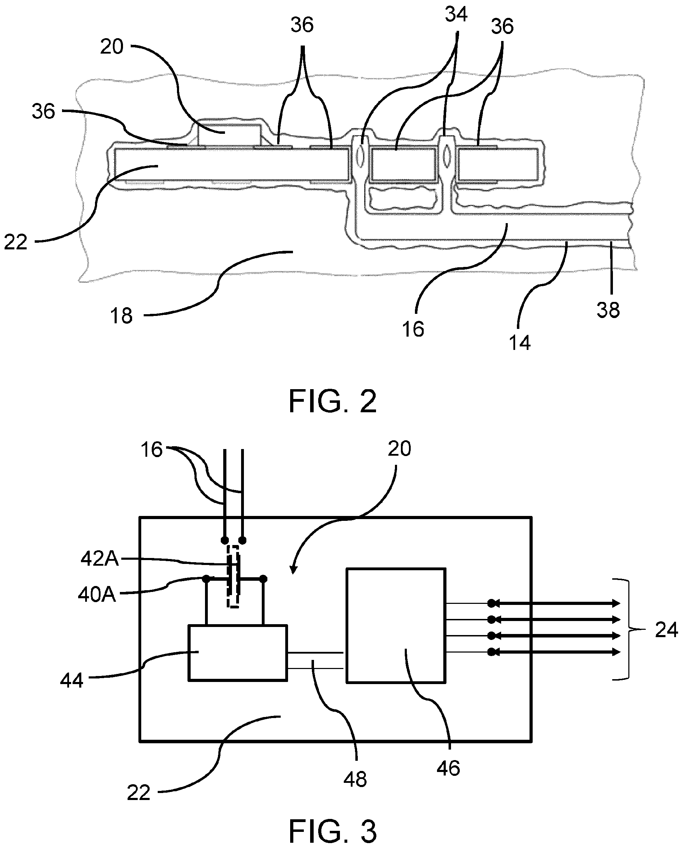

Figur 2 zeigt die Detektionsvorrichtung 20, die gemäß einer Ausführungsform an dem elektrotechnischen Element 22 angeordnet ist. Ferner ist nicht nur der elektrische Leiter 16 von der Dichtmasse 18 umgeben, sondern auch die Detektionsvorrichtung 20 und das elektrotechnische Element 22.

Das elektrotechnische Element 22 kann eine Leiterplatte 54 umfassen, die mittels einer Press-Fit-Verbindung 34 mit dem elektrischen Leiter 16, z. B. eine Stromschiene, elektrisch verbunden ist. Zwischen der Leiterplatte 54 und der Press-Fit-Verbindung 34 bzw. der Detektionsvorrichtung 20 kann zumindest abschnittweise eine isolierende Beschichtung 36 vorgesehen sein.

Mit fortlaufender Gebrauchsdauer können sich Ablösungsbereiche 38 der Dichtmasse 18 entlang des elektrischen Leiters 16 und entlang der Oberfläche des elektrotechnischen Elements 22 bilden. In diese Ablösungsbereiche 38 kann das aus dem Behälter 12 ausgetretene tropfbare Medium 14 mit der Zeit eindringen und sich zumindest teilweise an der Oberfläche des elektrotechnischen Elements 22 ausbreiten, wo es von der Detektionsvorrichtung 20 detektiert werden kann.

Die Detektionsvorrichtung 20 kann eine Anordnung aus elektrischen Kontakten mit einem Isolator oder einem Material, z. B. ein Trockenisolator oder Dielektrikum, aufweisen, die bei Kontamination mit dem tropfbaren Medium 14 z. B. zu einer messbaren Veränderung einer angelegten elektrischen Spannung und damit einer Veränderung der elektrischen Leitfähigkeit der Detektionsvorrichtung 20 führt, wodurch die Kontamination mit dem tropfbaren Medium 14 und damit die Leckage detektierbar ist.

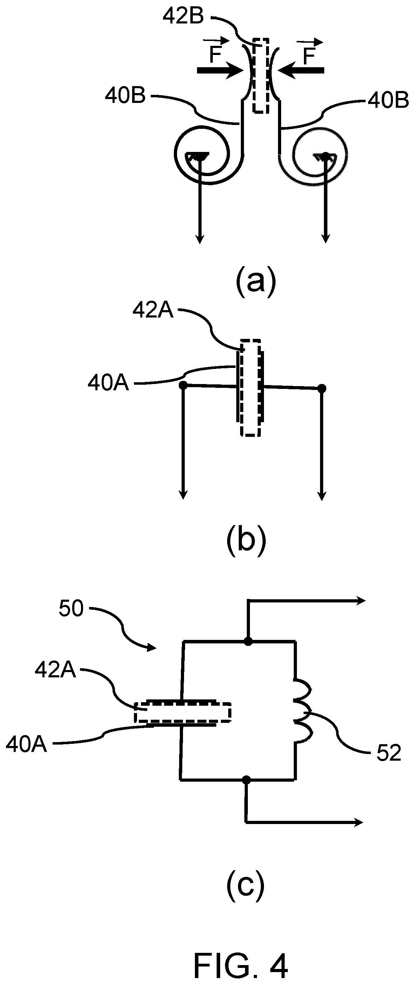

Figur 4 zeigt schematisch drei Beispiele für eine solche Anordnung.

Im Beispiel (a) umfasst die Detektionsvorrichtung 20 zwei elektrische Kontakte 40B und einen Isolator 42B, der zwischen den elektrischen Kontakten 40B angeordnet ist. Die beiden elektrischen Kontakte 40B sind in Richtung der angegebenen Pfeile kraftbeaufschlagt, d.h. sie werden mit einer Kraft F gegen den Isolator 42B gedrückt. Für den Isolator 42B ist ein Material gewählt, das sich bei der Kontaminierung mit dem tropfbaren Medium 14 auflöst. Tritt dieser Fall ein, so führt die Kraftbeaufschlagung zu einer elektrischen Kontaktierung der beiden elektrischen Kontakte 40B, wodurch der normalerweise offene Stromkreis geschlossen wird. Entsprechend kann ein angelegter Strom über die beiden elektrischen Kontakte 40B fließen, d.h. eine feststellbare Veränderung der elektrischen Leitfähigkeit der Detektionsvorrichtung 20 stellt sich ein, der entsprechend ausgewertet werden kann. Beispiel (a) kann z. B. als Schaltkontaktauswertung bezeichnet werden.

Im Beispiel (b) umfasst die Detektionsvorrichtung 20 eine Elektrodenanordnung 40A, beispielsweise einen Kondensator, mit einem innerhalb der Elektrodenanordnung 40A angeordneten Material 42A, z. B. ein Trockenisolator, das ausgebildet ist, bei der Kontamination mit dem tropfbaren Medium 14 elektrisch leitfähig zu werden und dadurch die elektrische Leitfähigkeit der Detektionsvorrichtung 20 zu verändern. Beispiel (b) kann z. B. als ohmscher Detektor bezeichnet werden.

Im Beispiel (c) bildet die Elektrodenanordnung 40A mit einer Spule 52 einen Schwingkreis 50. Durch die Kontamination mit dem tropfbaren Medium 14 kann die Permittivität des Materials 42A veränderbar und dadurch eine (signifikante) Schwingkreisfrequenzverschiebung zwischen "trocken" und "nass" feststellbar sein. Beispiel (c) kann z. B. als Schwingkreisdetektor bezeichnet werden.

Eine solche durch Kontamination beeinflussbare Anordnung gemäß diesen Beispielen (a)-(c), z. B. die Elektrodenanordnung 40A mit dem Material 42A, kann über eine Schaltung 44 und eine elektrische Verbindung 48 mit einer Steuereinheit 46 elektrisch verbunden sein, wie in Figur 3 schematisch gezeigt ist.

Die Steuereinheit 46 kann dazu ausgebildet sein, die Elektrodenanordnung 40A bzw. die elektrischen Kontakte 40B kontinuierlich, periodisch und/oder zu vorher festgelegten Zeitpunkten mit elektrischem Strom zu beaufschlagen und die Veränderung der elektrischen Leitfähigkeit der Detektionsvorrichtung 20 festzustellen.

Ferner kann die Steuereinheit 46, z. B. über die Steckverbindung 24, mit einem Kraftfahrzeug-Steuergerät zur Übertragung von Detektionsinformationen signaltechnisch verbunden und/oder mit einer Kraftfahrzeug-Stromversorgung elektrisch verbunden sein. Die Steuereinheit 46 kann so von der Kraftfahrzeug-Stromversorgung mit elektrischem Strom zur Strombeaufschlagung der Elektrodenanordnung 40A bzw. der elektrischen Kontakte 40B versorgt werden. Die Detektionsinformationen, welche insbesondere Informationen umfassen können, dass eine Leckage detektiert worden ist, können an das Kraftfahrzeug-Steuergerät übertragen werden und das Kraftfahrzeug-Steuergerät z. B. dazu veranlassen, ein Steuersignal an eine Anzeigevorrichtung zur Ausgabe eines Warnhinweises zu senden. Mittels der Anzeigevorrichtung, die z. B. am Armaturenbrett im Kraftfahrzeug-Innenraum angeordnet ist, kann der Nutzer frühzeitig über die detektierte Leckage gewarnt werden und entsprechende Maßnahmen, z. B. eine Reparatur der defekten Abdichtung, einleiten.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich, der durch die Ansprüche definiert wird, fallen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

### Bezugszeichenliste

- 10: Vorrichtung
- 12: Behälter
- 14: Tropfbares Medium
- 16: Elektrischer Leiter
- 18: Dichtmasse
- 20: Detektionsvorrichtung
- 22: Elektrotechnisches Element
- 24: Steckverbindung
- 26: Elektrotechnische Bauteile
- 28: Gehäuse des elektrotechnischen Elements
- 30: Zweites elektrotechnisches Element
- 32: Leiterdurchführung
- 34: Press-Fit-Verbindung
- 36: Isolierende Beschichtung
- 38: Ablösungsbereiche der Dichtmasse
- 40A: Elektrodenanordnung
- 40B: Elektrische Kontakte
- 42A, 42B: Isolator
- 44: Schaltung
- 46: Steuereinheit
- 48: Elektrische Verbindung
- 50: Schwingkreis
- 52: Spule
- 54: Leiterplatte
*****

## Patentansprüche

1. Vorrichtung (10) mit Leckagedetektion eines tropfbaren Mediums (14) für ein Kraftfahrzeug, vorzugsweise Nutzfahrzeug, umfassend:
einen Behälter (12) zur Aufnahme des tropfbaren Mediums (14), vorzugsweise eines nicht-leitenden tropfbaren Mediums (14);
einen elektrischen Leiter (16), der durch eine abgedichtete Leiterdurchführung (32) des Behälters (12) hindurchgeführt ist, wobei der elektrische Leiter (16) außerhalb des Behälters (12) mit einem elektrotechnischen Element (22) elektrisch verbunden ist, und die Detektionsvorrichtung (20) am elektrischen Leiter (16), an einer Übergangsstelle vom elektrischen Leiter (16) zum elektrotechnischen Element (22) und/oder an dem elektrotechnischen Element (22) angeordnet ist; und
eine außerhalb des Behälters (12) angeordnete Detektionsvorrichtung (20) zur Detektion einer Leckage in der Leiterdurchführung (32), durch die das tropfbare Medium (14) entlang des elektrischen Leiters (16) aus dem Behälter (12) austritt.

2. Vorrichtung (10) nach Anspruch 1, wobei der elektrische Leiter (16) außerhalb des Behälters (12) zumindest abschnittsweise von einer, vorzugsweise dauerelastischen und/oder an den Behälter (12) angrenzenden, Dichtmasse (18) zur Abdichtung der Leiterdurchführung (32) umgeben ist, und die Detektionsvorrichtung (20) ausgebildet ist, die Leckage anhand des ausgetretenen tropfbaren Mediums (14), welches in einen Bereich zwischen dem elektrischen Leiter (16) und der Dichtmasse (18) eingedrungen ist, zu detektieren.

3. Vorrichtung (10) nach Anspruch 2, wobei die Detektionsvorrichtung (20) mit dem elektrischen Leiter (16) zumindest abschnittweise von der Dichtmasse (18) umgeben ist.

4. Vorrichtung (10) nach einem der Ansprüche 2 oder 3,
wobei das elektrotechnische Element (22) mit der Detektionsvorrichtung (20) von der Dichtmasse (18) umgeben ist, vorzugsweise derart, dass sich das tropfbare Medium (14) im Falle der Leckage zumindest teilweise an einer Oberfläche des elektrotechnischen Elements (22) ausbreitet und von der Detektionsvorrichtung (20) detektierbar ist.

5. Vorrichtung (10) nach einem der vorhergehenden Ansprüche, wobei das elektrotechnische Element (22) eine Leiterplatte (54) umfasst, die vorzugsweise mittels einer Press-Fit-Verbindung (34) mit dem elektrischen Leiter (16) elektrisch verbunden ist.

6. Vorrichtung (10) nach einem der vorhergehenden Ansprüche, wobei die Leckage durch ein Feststellen einer Veränderung der elektrischen Leitfähigkeit der Detektionsvorrichtung (20) bei Kontamination mit dem tropfbaren Medium (14) detektierbar ist.

7. Vorrichtung (10) nach Anspruch 6, die Detektionsvorrichtung (20) umfassend zwei elektrische Kontakte (40B) und einen Isolator (42B), der zwischen den elektrischen Kontakten (40B) angeordnet und ausgebildet ist, sich bei der Kontaminierung mit dem tropfbaren Medium (14) aufzulösen, wobei die Kontakte (40B) kraftbeaufschlagt sind, vorzugsweise derart, dass sich eine Kontaktierung der elektrischen Kontakte (40B) einstellt und damit die elektrische Leitfähigkeit der Detektionsvorrichtung (20) verändert, wenn sich der Isolator (42B) auflöst.

8. Vorrichtung (10) nach Anspruch 6 oder 7, die Detektionsvorrichtung (20) umfassend eine Elektrodenanordnung (40A) mit einem innerhalb der Elektrodenanordnung (40A) angeordneten Material (42A), wobei eine Permittivität des Materials (42A) durch die Kontamination mit dem tropfbaren Medium (14) veränderbar ist, vorzugsweise das Material (42A) durch die Kontamination elektrisch leitfähig wird, und dadurch die elektrische Leitfähigkeit der Detektionsvorrichtung (20) veränderbar ist.

9. Vorrichtung (10) nach Anspruch 8, wobei die Detektionsvorrichtung (20) einen Schwingkreis (50) mit der Elektrodenanordnung (40A) umfasst, und vorzugsweise die Permittivität des Materials (42A) durch die Kontamination mit dem tropfbaren Medium (14) veränderbar und dadurch eine Schwingkreisfrequenzverschiebung feststellbar ist.

10. Vorrichtung (10) nach einem der Ansprüche 6 bis 9, die Detektionsvorrichtung (20) ferner umfassend eine Steuereinheit (46), die mit einem Kraftfahrzeug-Steuergerät zur Übertragung von Detektionsinformationen signaltechnisch verbunden und/oder mit einer Kraftfahrzeug-Stromversorgung elektrisch verbunden ist.

11. Vorrichtung (10) nach einem der vorhergehenden Ansprüche, wobei der Behälter (12) ein Kraftstofftank zur Aufnahme eines Kraftstoffs, vorzugsweise eines Dieselkraftstoffs, als das tropfbare Medium (14) ist.

12. Vorrichtung (10) nach Anspruch 11, wenn abhängig von Anspruch 4, wobei das elektrotechnische Element (22) eine Leistungs- und/oder Steuerelektronik eines Kraftstoffheizers umfasst, die über den elektrischen Leiter (16) mit einem innerhalb des Kraftstofftanks angeordneten Heizelements, vorzugsweise mit einem positiven Temperaturkoeffizienten, elektrisch verbunden ist.

13. Vorrichtung (10) nach einem der Ansprüche 1 bis 10, wobei der Behälter (12) ein Gehäuse einer Traktionsbatterievorrichtung ist, in dem elektrische Speicherzellen zur Kühlung von einem Kühlmittel, vorzugsweise einem Transformatorenöl, als das tropfbare Medium (14) umspült werden.

14. Vorrichtung (10) nach Anspruch 12, wenn abhängig von Anspruch 4 wobei
der elektrische Leiter (16) eine Hochvolt- und/oder eine Niedervoltverbindung umfasst, und/oder
das elektrotechnische Element (22) eine Elektronik und/oder einen Steckverbinder umfasst, und/oder
der elektrische Leiter (16) Einzelleitungen und/oder, vorzugsweise polymerextrudierte, Kupferlitzen umfasst.

15. Kraftfahrzeug, vorzugsweise Nutzfahrzeug, mit einer Vorrichtung (10) nach einem der vorhergehenden Ansprüche.

## Claims

1. Device (10) with leak detection of a drippable medium (14) for a motor vehicle, preferably a commercial vehicle, comprising:
a container (12) for receiving the drippable medium (14), preferably a non-conductive drippable medium (14);
an electrical conductor (16) which is guided through a sealed conductor feedthrough (32) of the container (12), wherein the electrical conductor (16) is electrically connected outside the container (12) to an electrotechnical element (22), and wherein the detection device (20) is arranged on the electrical conductor (16), at a transition point from the electrical conductor (16) to the electrotechnical element (22) and/or on the electrotechnical element (22); and
a detection device (20) arranged outside the container (12) for detecting a leakage in the conductor feedthrough (32), through which the drippable medium (14) exits the container (12) along the electrical conductor (16).

2. Device (10) according to claim 1, wherein the electrical conductor (16) is surrounded, at least in sections, outside the container (12) by a sealing compound (18), preferably permanently elastic and/or adjoining the container (12), for sealing the conductor feedthrough (32), and wherein the detection device (20) is configured to detect the leakage on the basis of the drippable medium (14) that has leaked out and has penetrated into a region between the electrical conductor (16) and the sealing compound (18).

3. Device (10) according to claim 2, wherein the detection device (20), together with the electrical conductor (16), is surrounded, at least in sections, by the sealing compound (18).

4. Device (10) according to claim 2 or 3, wherein the electrotechnical element (22) together with the detection device (20) is surrounded by the sealing compound (18), preferably in such a way that, in the event of leakage, the drippable medium (14) spreads at least partially on a surface of the electrotechnical element (22) and is detectable by the detection device (20).

5. Device (10) according to any one of the preceding claims, wherein the electrotechnical element (22) comprises a printed circuit board (54), preferably electrically connected to the electrical conductor (16) by means of a press-fit connection (34).

6. Device (10) according to any one of the preceding claims, wherein the leakage is detectable by determining a change in the electrical conductivity of the detection device (20) upon contamination with the drippable medium (14).

7. Device (10) according to claim 6, the detection device (20) comprising two electrical contacts (40B) and an insulator (42B) arranged between the electrical contacts (40B) and configured to dissolve upon contamination with the drippable medium (14), wherein the contacts (40B) are biased, preferably such that contact between the electrical contacts (40B) is established and thereby the electrical conductivity of the detection device (20) changes when the insulator (42B) dissolves.

8. Device (10) according to claim 6 or 7, the detection device (20) comprising an electrode arrangement (40A) with a material (42A) arranged within the electrode arrangement (40A), wherein a permittivity of the material (42A) is changeable by contamination with the drippable medium (14), preferably the material (42A) becomes electrically conductive due to the contamination, and thereby the electrical conductivity of the detection device (20) is changeable.

9. Device (10) according to claim 8, wherein the detection device (20) comprises a resonant circuit (50) with the electrode arrangement (40A), and preferably the permittivity of the material (42A) is changeable by contamination with the drippable medium (14) and thereby a shift of the resonant frequency of the resonant circuit is detectable.

10. Device (10) according to any one of claims 6 to 9, wherein the detection device (20) further comprises a control unit (46) which is in signal communication with a motor vehicle control unit for the transmission of detection information and/or is electrically connected to a motor vehicle power supply.

11. Device (10) according to any one of the preceding claims, wherein the container (12) is a fuel tank for accommodating fuel, preferably diesel fuel, as the drippable medium (14).

12. Device (10) according to claim 11, when dependent on claim 4, wherein the electrotechnical element (22) comprises power and/or control electronics of a fuel heater, which are electrically connected via the electrical conductor (16) to a heating element arranged within the fuel tank, preferably a positive-temperature-coefficient heating element.

13. Device (10) according to any one of claims 1 to 10, wherein the container (12) is a housing of a traction-battery device in which electrical storage cells are flowed around for cooling by a coolant, preferably a transformer oil, as the drippable medium (14).

14. Device (10) according to claim 12, when dependent on claim 4, wherein
the electrical conductor (16) comprises a high-voltage and/or a low-voltage connection, and/or
the electrotechnical element (22) comprises electronics and/or a connector, and/or
the electrical conductor (16) comprises individual conductors and/or, preferably polymer-extruded, copper strands.

15. Motor vehicle, preferably a utility vehicle, comprising a device (10) according to any one of the preceding claims.

## Revendications

1. Dispositif (10) à détection de fuite d'un milieu (14) apte à former des gouttes pour un véhicule automobile, de préférence un véhicule utilitaire, comprenant :
un récipient (12) destiné à recevoir le milieu (14) apte à former des gouttes, de préférence un milieu (14) apte à former des gouttes non conducteur ;
un conducteur électrique (16) qui est guidé à travers une traversée de conducteur étanche (32) du récipient (12), le conducteur électrique (16) étant raccordé électriquement à l'extérieur du récipient (12) à un élément électrotechnique (22), et le système de détection (20) étant disposé sur le conducteur électrique (16), en un point de transition du conducteur électrique (16) à l'élément électrotechnique (22) et/ou sur l'élément électrotechnique (22) ; et
un système de détection (20) disposé à l'extérieur du récipient (12) pour détecter une fuite dans la traversée de conducteur (32) entraînant une sortie du milieu (14) apte à former des gouttes hors du récipient (12) le long du conducteur électrique (16).

2. Dispositif (10) selon la revendication 1, dans lequel le conducteur électrique (16) est entouré à l'extérieur du récipient (12), au moins par sections, par une masse d'étanchéité (18), de préférence à élasticité permanente et/ou adjacente au récipient (12), pour l'étanchéité de la traversée de conducteur (32), et en ce que le système de détection (20) est conçu pour détecter la fuite sur la base du milieu (14) apte à former des gouttes s'étant échappé qui a pénétré dans une zone située entre le conducteur électrique (16) et la masse d'étanchéité (18).

3. Dispositif (10) selon la revendication 2, dans lequel le système de détection (20) comprenant le conducteur électrique (16) est entouré, au moins par sections, par la masse d'étanchéité (18).

4. Dispositif (10) selon l'une des revendications 2 ou 3, dans lequel l'élément électrotechnique (22), avec le système de détection (20), est entouré par la masse d'étanchéité (18), de préférence de telle sorte qu'en cas de fuite, le milieu (14) apte à former des gouttes se propage au moins en partie sur une surface de l'élément électrotechnique (22) et puisse être détecté par le système de détection (20).

5. Dispositif (10) selon l'une des revendications précédentes, dans lequel l'élément électrotechnique (22) comprend une carte de circuit imprimé (54) qui est de préférence raccordée électriquement au conducteur électrique (16) au moyen d'une connexion à ajustement serré (34).

6. Dispositif (10) selon l'une des revendications précédentes, dans lequel la fuite peut être détectée par détermination d'une modification de la conductivité électrique du système de détection (20) lors d'une contamination par le milieu (14) apte à former des gouttes.

7. Dispositif (10) selon la revendication 6, le système de détection (20) comprenant deux contacts électriques (40B) et un isolant (42B) qui est disposé entre les contacts électriques (40B) et est conçu pour se dissoudre lors de la contamination par le milieu (14) apte à former des gouttes, les contacts (40B) étant sollicités par une force, de préférence de telle sorte qu'une mise en contact des contacts électriques (40B) se produit et que la conductivité électrique du système de détection (20) est ainsi modifiée lorsque l'isolant (42B) se dissout.

8. Dispositif (10) selon la revendication 6 ou 7, le système de détection (20) comprenant un agencement d'électrodes (40A) ayant un matériau (42A) disposé à l'intérieur de l'agencement d'électrodes (40A), la permittivité du matériau (42A) pouvant être modifiée par la contamination par le milieu (14) apte à former des gouttes, le matériau (42A) devenant de préférence électriquement conducteur en raison de la contamination, et la conductivité électrique du système de détection (20) pouvant ainsi être modifiée.

9. Dispositif (10) selon la revendication 8, dans lequel le système de détection (20) comprend un circuit oscillant (50) comportant l'agencement d'électrodes (40A), et la permittivité du matériau (42A) peut de préférence être modifiée par la contamination par le milieu (14) apte à former des gouttes et un décalage de fréquence du circuit oscillant peut ainsi être déterminé.

10. Dispositif (10) selon l'une des revendications 6 à 9, le système de détection (20) comprenant en outre une unité de commande (46) qui est raccordée de manière à transmettre un signal à un calculateur de véhicule automobile pour la transmission d'informations de détection et/ou est raccordée électriquement à une alimentation électrique de véhicule automobile.

11. Dispositif (10) selon l'une des revendications précédentes, dans lequel le récipient (12) est un réservoir de carburant destiné à recevoir un carburant, de préférence un carburant diesel, en tant que milieu (14) apte à former des gouttes.

12. Dispositif (10) selon la revendication 11, lorsqu'elle dépend de la revendication 4, dans lequel l'élément électrotechnique (22) comprend une électronique de puissance et/ou de commande d'un réchauffeur de carburant, laquelle est raccordée électriquement, via le conducteur électrique (16), à un élément chauffant disposé à l'intérieur du réservoir de carburant, ayant de préférence un coefficient de température positif.

13. Dispositif (10) selon l'une des revendications 1 à 10, dans lequel le récipient (12) est un boîtier d'un dispositif de batterie de traction dans lequel des cellules de stockage électriques baignent à des fins de refroidissement dans un liquide de refroidissement, de préférence une huile de transformateur, en tant que milieu (14) apte à former des gouttes.

14. Dispositif (10) selon la revendication 12, lorsqu'elle dépend de la revendication 4, dans lequel
le conducteur électrique (16) comprend une connexion haute tension et/ou basse tension, et/ou
l'élément électrotechnique (22) comprend une électronique et/ou un connecteur, et/ou
le conducteur électrique (16) comprend des conducteurs individuels et/ou des torons de cuivre, de préférence extrudés dans un polymère.

15. véhicule automobile, de préférence véhicule utilitaire, comportant un dispositif (10) selon l'une des revendications précédentes.
